# EUROPEAN PATENT SPECIFICATION

(11) **EP 3 187 037 B1**
(45) Date of publication and mention of the grant of the patent: **09.05.2018**
(21) Application number: 16205609.7
(22) Date of filing: 21.12.2016
(51) Int. Cl.: A01G 3/025, A01D 34/90, A45F 3/14

(54) **LOPPER ARRANGEMENT**
KAPPERANORDNUNG
AGENCEMENT D'ÉBRANCHEUR

(30) Priority: 22.12.2015 FI 20155995
(43) Date of publication of application: 05.07.2017
(73) Proprietor: Fiskars Finland Oy Ab, 00560 Helsinki (FI)
(72) Inventor: Heine, Mikko, 00560 Helsinki (FI); Vänttilä, Olli-Pekka, 00560 Helsinki (FI); Huhtala, Juha, 00560 Helsinki (FI)
(74) Representative: Kolster Oy Ab

(56) References cited:
- EP-A1- 2 022 320
- WO-A1-2008/147259
- US-A- 4 179 805

## Description

### BACKGROUND OF THE INVENTION

### FIELD OF THE INVENTION

This invention relates to a lopper arrangement and more particularly to a solution which makes it easier for a user to handle a lopper while working with it. EP 2 022 320 A1 discloses such an arrangement.

### DESCRIPTION OF PRIOR ART

Previously there is known a lopper with a lopping head having a jaw for cutting a workpiece. The lopping head is attached to an elongated shaft having an actuator in an opposite end of the shaft as compared to the lopping head.

With the known lopper a user is able to cut branches of trees, for instance, at a level high above the ground. The user may grab the lower end of the lopper and position the upper end of the lopper with the lopping head such that a branch is located in the jaw. At that stage the user can use the actuator in the lower end of the lopper to actuate the jaw to carry out a cutting movement. In this way the user may remain standing on the ground, for instance, while cutting branches of trees.

A problem with the above described lopper is that it is relatively cumbersome to use. One reason for this is that the elongated shaft may be long. Therefore the user needs to use a significant amount of force to position the lopping head in the right position and to keep the lopping head steady during a cutting movement. Use of such a lopper for several hours, for instance, is heavy in particular for the arms of the user.

### SUMMARY OF THE INVENTION

An object of the present invention is to solve the above mentioned drawback and to provide a lopper arrangement with an improved user friendliness. This object is achieved with a lopper arrangement according to independent claim 1.

The use of an attachment members on the elongated shaft makes it possible for a user to attach a support strap to the attachment members which are located on the elongated shaft and to suspend the elongated shaft from the support strap. This makes it easier for the user to work with the lopper, as the arms of the user no longer need to carry the entire weight of the lopper during the entire period of time that the user carries around the lopper.

### BRIEF DESCRIPTION OF DRAWINGS

In the following the present invention will be described in closer detail by way of example and with reference to the attached drawings, in which
Figures 1 and 2 illustrate a first embodiment of a lopper arrangement, and
Figures 3 to 5 illustrate details of the lopper arrangement of Figures 1 and 2.

### DESCRIPTION OF AT LEAST ONE EMBODIMENT

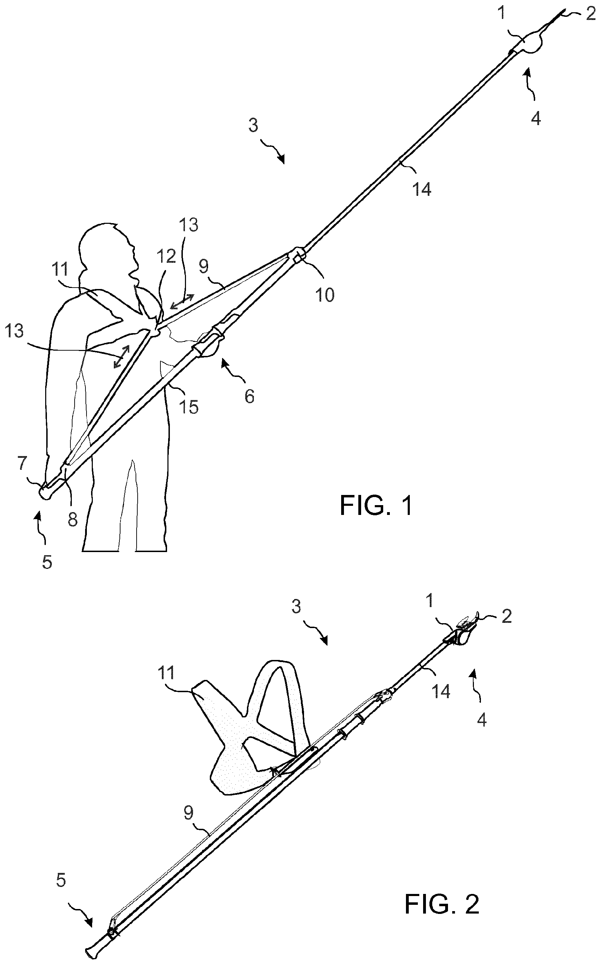

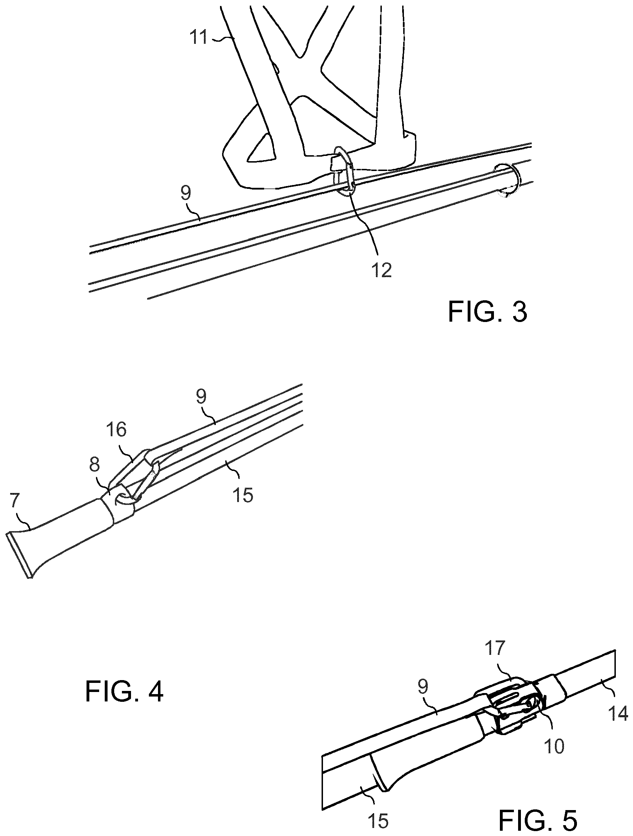

Figures 1 to 5 illustrate a first embodiment of a lopper arrangement. Figure 1 illustrates the lopping arrangement with a telescopic lopper in an extended position while Figure 2 illustrates the lopper in a withdrawn position. Figures 3 to 5 illustrate details of the lopping arrangement shown in Figures 1 and 2.

The arrangement comprises a lopper with a lopping head 1 having a jaw 2 for cutting a workpiece received in the jaw 2. The lopping head 1 is attached to a first end 4 of an elongated shaft 3. A second end 5 of the elongated shaft is provided with a gripping area 7 at which a user may grip the lopper during use.

An actuator 6 is provided in proximity of the second end 5. This actuator provides a user with a possibility of actuating the jaw 2 to carry out a cutting movement. During a cutting movement two sharp blades of the jaw 2 move closer to each other such that a workpiece received in the jaw 2 between these blades is subjected to a cutting action by the blades, for instance. In many implementations it is sufficient that only one of the blades move (such as rotates around a joint) while the other one remains fixed. The actuator may in praxis be implemented as a rope having a first end attached to a movable part of the jaw 2 and with a second end attached in proximity of the second end 5 of the elongated shaft. In Figure 1 it is, however, by way of example assumed that the rope is threaded through the inside of or extends along the outer surface of the hollow elongated shaft 3 and the second end is attached to a generally cylindrical actuator 6 sliding along an outer surface of the elongated shaft 3. Consequently, once the actuator 6 is moved towards the second end of the elongated shaft 3, the rope is tensioned such that a cutting force is transmitted to the jaw 2.

The elongated shaft 3 is provided with a first attachment member 8 in proximity of the second end 5 for receiving a first end of a support strap 9. The elongated shaft is also provided with a second attachment member 10 for receiving a second end of the support strap 9. The first and second attachment members are illustrated in more detail in Figures 4 and 5. In praxis the first and second attachment members may be implemented as any suitable members for receiving the opposite ends of the support strap 9, such as loops, hooks or fittings dimensioned to via the support strap 9 carry the weight of the lopper or at least a part of the weight. In Figures 4 and 5 it has by way of example been assumed that the first attachment member 8 and second attachment member 10 are both implemented by loops, in other words through holes, which can receive spring-hooks 16 and 17 used to attach the opposite ends of the support strap to the elongated shaft. The strap may be implemented as a belt, a rope, a string or a wire of any suitable material including leather, plastic or steel, for instance.

In the example illustrated in the figures, the lopper arrangement additionally comprises a harness 11, which in Figure 1 is attached to a user, such as around the upper part of the body of the user. A front side of the harness which is located on a front side of the user is provided with a loop 12. In the illustrated example the support strap 9 is received in this loop 12.

Depending on the implementation the loop 12 may consist of a closed loop, such as of a ring, of an open hook or of a spring-hook (an open loop with a spring loaded gate), for instance. In Figure 3 it is by way of example assumed that the loop 12 is a spring-hook. In any case at least a lower part of the loop 12 is closed for suspending the elongated shaft 3 from the support strap 9 received in the loop 12. In this way use of the lopper becomes more user friendly, as the user no longer needs to carry the entire weight of the lopper with his arms.

In some implementations the loop 12 and support strap 9 may be shaped to allow the support strap 9 to freely slide through the loop 12 in a longitudinal direction 13 of the support strap. This makes it easier for the user to position the lopping heat 1 in a correct position in order to cut branches with the jaw 2, for instance.

In the illustrated example though not necessarily in all implementations, the actuator 6 is provided in a position between the first attachment member 8 and the second attachment member 10. This results in a ergonomic design where the user can easily use the actuator 6 with one hand without being hindered by contact with the strap 9.

In the illustrated embodiment it is by way of example assumed that the lopper has an elongated shaft 3 implemented as a telescopic shaft. Figure 1 illustrates the shaft 3 in an extended position while Figure 2 illustrates the shaft 3 in a withdrawn position. A telescopic shaft refers to a shaft having at least two tubes with different diameters, such as a first tube 14 with a smaller diameter which protrudes into a second tube 15 with a larger diameter. The length of the shaft 3 may in that case be adjusted by adjusting the distance that the first tube 14 with the smaller diameter protrudes into the second tube 15 with the larger diameter.

In case of a telescopic shaft the lopping head 1 may be attached to one of the first and second tubes while the first and second attachment members 8 and 10 are arranged to the second one of the first and second tubes. In the illustrated example the lopping head 1 is attached to the first shaft 14 and the first and second attachment members 8 and 10 are arranged to the second tube 15.

It is to be understood that the above description and the accompanying figures are only intended to illustrate the present invention. It will be obvious to a person skilled in the art that the invention can be varied and modified within the scope of the appended claims.

## Claims

1. A lopper arrangement comprising
a lopping head (1) having jaw (2) for cutting a workpiece received in the jaw with a cutting movement,
an elongated shaft (3) with a first end (4) to which said lopping head (1) is attached and with a second end (5) with a gripping area (7), and
an actuator (6) for allowing a user to via the actuator (6) actuate the jaw (2) to carry out a cutting movement, **characterized in that** the elongated shaft (3)comprises
a first attachment member (8) in proximity of the second end (5) for receiving a first end of a support strap (9), and
a second attachment member (10) at a location between the first attachment member (8) and the lopping head (1) for receiving a second end of a support strap (9), and **in that**
the lopper arrangement comprises a harness (11) to be attached to a user with a front side of the harness on a front side of the user,
the front side of the harness (11) is provided with a loop (12) for receiving a support strap (9) having a first and a second end attached to the first and respectively second attachment members (8, 10),
the loop (12) is shaped with an at least downwards closed section for suspending the elongated shaft (3) from the support strap (9) received in the loop, and
the loop (12) and support strap (9) are shaped to allow the support strap (9) to freely slide through the loop (12) in a longitudinal direction (13) of the support strap (9).

2. The lopper arrangement according to claim 1, wherein the actuator (6) is provided in a position between the first attachment member (8) and the second attachment member (10).

3. The lopper arrangement according to one of claims 1 to 2, wherein a support strap (9) having a first and a second end extends between the first (8) and the second (10) attachment member of the elongated shaft (3).

4. The lopper arrangement according to one of claims 1 to 3, wherein
the elongated shaft (3) is a telescopic shaft comprising a first tube (14) with a smaller diameter which protrudes into a second tube (15) having a larger diameter for providing an adjustable length to the elongated shaft (3)

5. The lopper arrangement according to claim 4, wherein the lopping head (1) is attached to one of the first and second tubes (14, 15), and the first and second attachment members (8, 10) are located on the other one of the first and second tubes (14, 15).

## Patentansprüche

1. Kapper-Anordnung, mit
einem Schneide-Kopf (1) mit einem Maul (2) zum Schneiden eines in dem Maul aufgenommenen Werkstücks mit einer Schneidebewegung,
einem gestreckten Schaft (3) mit einem ersten Ende (4), an welchem der Schneide-Kopf (1) angebracht ist, und mit einem zweiten Ende (5) mit einem Greifbereich (7), und
einem Aktuator (6), der es einem Benutzer ermöglicht, mittels des Aktuators (6) das Maul (2) zu betätigen, um eine Schneidebewegung auszuführen,
**dadurch gekennzeichnet, dass** der gestreckte Schaft (3) aufweist
ein erstes Befestigungselement (8) im Bereich des zweiten Endes (5) zur Aufnahme eines ersten Endes eines Haltebands (9), und
ein zweites Befestigungselement (10) an einer Stelle zwischen dem ersten Befestigungselement (8) und dem Schneide-Kopf (1) zur Aufnahme eines zweiten Endes eines Haltestreifens (9), und dass
die Kapper-Anordnung einen Tragegurt (11) aufweist, der an einem Benutzer anzubringen ist, wobei eine Vorderseite des Tragegurts an einer Vorderseite des Benutzers angeordnet ist,
die Vorderseite des Tragegurts (11) mit einer Schlaufe (12) zur Aufnahme eines Haltebands (9) versehen ist, das ein erstes Ende und ein zweites Ende hat, die entsprechend an dem ersten und dem zweiten Befestigungselement (8, 10) angebracht sind,
die Schlaufe (12) durch einen zumindest nach unten geschlossenen Abschnitt gebildet ist, so dass der gestreckte Schaft (3) an dem in der Schlaufe aufgenommenen Halteband (9) hängt, und
die Schlaufe (12) und das Halteband (9) so geformt sind, dass ein freies Gleiten des Haltebands (9) durch die Schlaufe (12) in einer Längsrichtung (13) des Haltebands (9) möglich ist.

2. Kapper-Anordnung nach Anspruch 1, wobei der Aktuator (6) an einer Position zwischen dem ersten Befestigungselement (8) und dem zweiten Befestigungselement (10) vorgesehen ist.

3. Kapper-Anordnung nach Anspruch 1 oder 2, wobei ein Halteband (9) mit einem ersten und einem zweiten Ende sich zwischen dem ersten (8) und dem zweiten (10) Befestigungselement des gestreckten Schafts (3) erstreckt.

4. Kapper-Anordnung nach einem der Ansprüche 1 bis 3, wobei
der gestreckte Schaft (3) ein Teleskop-Schaft ist mit einem ersten Rohr (14) mit einem kleineren Durchmesser, das in ein zweites Rohr (15) hineinragt, das einen größeren Durchmesser hat, sodass der gestreckte Schaft (3) eine verstellbare Länge hat.

5. Kapper-Anordnung nach Anspruch 4, wobei der Schneide-Kopf (1) an dem ersten oder dem zweiten Rohr (14, 15) angebracht ist und wobei das erste und das zweite Befestigungselement (8, 10) an dem entsprechenden anderen Rohr des ersten und des zweiten Rohrs (14, 15) angeordnet sind.

## Revendications

1. Système d'élagage comprenant
une tête d'élagage (1) possédant une mâchoire (2) afin de découper une pièce réceptionnée dans la mâchoire selon un mouvement de coupe,
une tige allongée (3) présentant une première extrémité (4) au niveau de laquelle ladite tête d'élagage (1) est fixée et une seconde extrémité (5) présentant une zone de préhension (7), et
un dispositif d'actionnement (6) pour permettre à un utilisateur par l'intermédiaire du dispositif d'actionnement (6) d'actionner la mâchoire (2) pour effectuer un mouvement de coupe, **caractérisé en ce que** la tige allongée (3) comprend
un premier élément de fixation (8) à proximité de la seconde extrémité (5) afin de recevoir une première extrémité d'une sangle de support (9), et
un second élément de fixation (10) à un emplacement compris entre le premier élément de fixation (8) et la tête d'élagage (1) afin de recevoir une seconde extrémité d'une sangle de support (9), et **en ce que**
le système d'élagage comprend un harnais (11) à fixer à un utilisateur avec un côté avant du harnais sur un côté avant de l'utilisateur,
le côté avant du harnais (11) étant muni d'une boucle (12) pour recevoir une sangle de support (9) présentant une première et une seconde extrémité fixées au premier et respectivement au second élément de fixation (8, 10),
la boucle (12) étant mise en forme avec au moins une section fermée vers le bas pour placer en suspension la tige allongée (3) depuis la sangle de support (9) reçue dans la boucle, et
la boucle (12) et la sangle de support (9) sont mises en forme pour permettre à la sangle de support (9) de coulisser librement à travers la boucle (12) dans un sens longitudinal (13) de la sangle de support (9).

2. Système d'élagage selon la revendication 1, le dispositif d'actionnement (6) étant disposé dans une position entre le premier élément de fixation (8) et le second élément de fixation (10).

3. Système d'élagage selon l'une des revendications 1 à 2, une sangle de support (9) possédant de première et seconde extrémités qui s'étendent entre le premier (8) et le second (10) élément de fixation de la tige allongée (3).

4. Système d'élagage selon l'une des revendications 1 à 3,
la tige allongée (3) étant une tige télescopique comprenant un premier tube (14) présentant un diamètre plus petit qui fait saillie dans un second tube (15) présentant un diamètre plus grand afin de fournir une longueur ajustable à la tige allongée (3).

5. Système d'élagage selon la revendication 4, la tête d'élagage (1) étant fixée à l'un du premier et du second tube (14, 15), et les premier et second éléments de fixation (8, 10) étant localisés sur l'autre du premier et du second tube (14, 15).
